Europäisches Patentamt

European Patent Office

Office européen des brevets

(19)

(11) **EP 1 478 146 A1**

(12) ## DEMANDE DE BREVET EUROPEEN

(43) Date de publication:
**17.11.2004 Bulletin 2004/47**

(51) Int Cl.⁷: **H04L 27/18**

(21) Numéro de dépôt: **04368039.6**

(22) Date de dépôt: **13.05.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **14.05.2003 FR 0305749**

(71) Demandeur: **STMicroelectronics S.A.**
**92120 Montrouge (FR)**

(72) Inventeur: **Meyer, Jacques**
**38950 Saint-Martin-le-Vinoux (FR)**

(74) Mandataire: **Schuffenecker, Thierry**
**97, chemin de Cassiopée,**
**Domaine de l'étoile**
**06610 La Gaude (FR)**

(54) **Réception de deux signaux décorrélés transmis sur un unique canal**

(57) Le procédé comporte les étapes suivantes :

- démodulation et décodage d'un premier signal UL au moyen d'une première chaîne de démodulation et de décodage (2,3) de manière à régénérer ladite première information UL;
- recodage (4) et mise en forme pour produire une forme d'onde à temps continu;
- appliquer à ladite forme d'onde à temps continu une fonction non linéaire (5) basée sur un jeu de coefficients mis à jour suivant un procédé de calcul de corrélation adaptatif;
- soustraire dudit signal composite le résultat de ladite fonction linéaire pour générer un résultat E;
- démodulation et décodage dudit résultat E au moyen d'une seconde chaîne de démodulation et de décodage (8,9) de manière à régénérer une seconde information LL.

Fig. 3

EP 1 478 146 A1

## Description

### Domaine technique de l'invention

La présente invention concerne le domaine des télécommunications et notamment un procédé de réception de deux signaux dé corrélés transmis sur un unique canal.

### Etat de la technique

Les besoins en bande passante s'accroissent parallèlement au développement des télécommunications.

D'une manière générale, on accroît la bande passante d'un canal de transmission donné en augmentant le nombre de bits transmis simultanément sur un canal de transmission numérique (opération que l'on désigne couramment *bit loading* dans la littérature anglo-saxonne) suivant un schéma de modulation donné définissant un ensemble fini de points complexes ou symboles porteurs d'une information. Dans la modulation par déplacement de phase (MDP ou *Phase Shift Keying* dans la littérature anglo-saxonne) on définit un ensemble de point complexes répartis sur un même cercle. Si la version la plus simple dite MDP2 (BPSK *Binary Phase Shift Keying* suivant la littérature anglo-saxonne) permet de transmettre 1 bit par symbol, la MDP4 (ou QPSK) transmet deux bits simultanément, on peut atteindre 3 bits avec la modulation 8QPSK et quatre bits avec la modulation 16QPSK.

La modulation de deux porteuses en quadrature, dite QAM *(Quadrature Amplitude Modulation* dans la littérature anglo-saxonne) permet d'accroître encore les débits de transmission au moyen d'une constellation de plus grande taille en opérant à la fois une modulation par déplacement de phase et d'amplitude. Une modulation 16QAM ou 64QAM permet d'accroître le débit jusqu'à 4 ou 6 bits d'information respectivement, surtout lorsque l'on associe au schéma de modulation un système performant de code correcteur d'erreur.

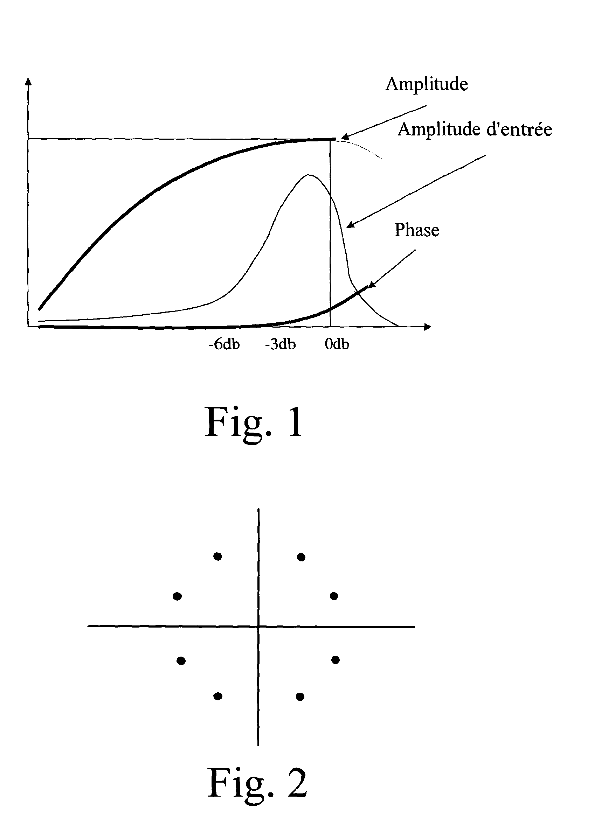

Les techniques QAM ne sont toutefois pas envisageables lorsque le canal de transmission souffre d'une non linéarité rédhibitoire comme cela se rencontre dans certaines situations, et notamment dans les transmissions par satellite. Comme on le sait, l'électronique qui est embarquée pour fonctionner dans un satellite est soumise à des strictes contraintes de fonctionnement, et notamment une consommation de puissance minimale du fait de l'alimentation par batterie solaire. C'est ainsi que les amplificateurs à ondes progressives (ou *travelling wave tube* TWAT suivant l'appellation anglo-saxonne) qui sont embarqués dans les satellites fonctionnent dans un mode saturé afin réduire au maximum la consommation en courant électronique. La non linéarité est alors très importante comme cela est illustré dans la figure 1 où, en abscisse, on trouve l'amplitude d'un signal d'entrée dans le transpondeur. En ordonnée, les courbes représentent respectivement l'amplitude de sortie et sa distribution statistique ainsi que la courbe de phase du signal de sortie du transpondeur. Comme on le voit clairement, autour du point de saturation fixé à 0 dB, le transpondeur présente une saturation correspondant à un maximum d'amplitude du signal de sortie de ce transpondeur.

En présence d'une telle non linéarité, on ne peut recourir aux constellations et aux performances des constellations de type QAM. On est alors contraint de se limiter à des schémas de modulation plus simples, compatibles avec la non linéarité affectant le canal de transmission, et notamment à la modulation par déplacement de phase (MDP) ou MPSK. En pratique, pour une transmission satellite, on ne dépasse guère les performances d'une modulation 8PSK ce qui correspond à la transmission de trois bits d'information simultanément.

Pour accroître le débit, il faut envisager d'autres techniques alternatives.

Tel est l'objet de la présente invention qui a pour but de remédier aux limites posées par la non linéarité de certains canaux de transmissions qui, de surcroît, est susceptible de varier dans le temps.

### Exposé de l'invention

La présente invention a pour but de proposer une technique permettant d'accroître le débit dans un canal de transmission non linéaire et de proposer une solution alternative aux modulations de type QAM.

Un autre but de la présente invention consiste à réaliser un procédé de réception, au travers un canal unique souffrant d'une non linéarité, d'un premier et second flux de données transmis suivant un schéma de modulation de type MPSK, avec un dispositif d'ajustement automatique des paramètres en fonction de la non linéarité du canal.

L'invention réalise ces buts au moyen d'un procédé de réception d'un signal composite transmis via un canal de transmission non linéaire suivant un schéma de modulation utilisant une constellation donnée comportant un premier signal UL et d'un second signal LL.

Le procédé comporte les étapes suivantes :

- démodulation et décodage dudit premier signal UL au moyen d'une première chaîne de démodulation et de décodage de manière à régénérer ladite première information UL ;
- recodage à partir de ladite première information UL régénérée un ensemble de symboles $z = x + j\,y$ représentatifs de ladite constellation utilisée en transmission et mise en forme pour reconstruire une forme d'onde à temps continu desdits symboles reconstitués ;
- appliquer à ladite forme d'onde à temps continu une fonction de non linéarité;
- soustraire audit signal composite le résultat de ladite fonction de non linéarité pour générer un résultat E ;

- démodulation et décodage dudit résultat E au moyen d'une seconde chaîne de démodulation et de décodage de manière à régénérer ladite seconde information LL.

Dans un mode de réalisation préféré, la fonction de non linéarité est réalisée au moyen d'une table de correspondance comportant p coefficients $C_n(k)$ avec k = 1 à p qui sont mis à jour suivant un processus adaptatif basé sur un calcul de corrélation entre le résultat E de ladite soustraction et ladite forme d'onde à temps continu.

De cette manière, on peut effectuer le décodage des deux informations UL et LL sans pour autant connaître de manière précise la non linéarité qui affecte le canal de transmission. Cela permet également au procédé de fonctionner même lorsque les caractéristiques internes du canal varient avec le temps.

Préférentiellement, on disposera des coefficients de la table de correspondance de manière plus dense autour du point de saturation du canal de transmission de manière à bénéficier de la précision la plus grande autour de ce point.

Dans un mode de réalisation particulier l'application desdits coefficients $C_n(k)$ de la fonction non linéaire est réalisée au moyen d'une double transformation cartésienne-polaire-cartésienne comportant les étapes suivantes :

- transformation en coordonnées polaires dudit signal d'entrée pour déterminer le module et la phase dudit signal d'entrée ;
- application de la réponse en amplitude F(p) et de la réponse en phase $\theta(\rho)$ correspondant au coefficient $C_n(k)$ à utiliser;
- conversion polaire/cartésienne du résultat.

Dans un mode de réalisation préféré, le coefficient courant $C_n(k)$ utilisé pour ladite fonction de non linéarité est mis à jour suivant le mécanisme suivant :

$$C_{n+1}(k) = C_n(k) + \mu \, E \, z^*$$

Avec

$\mu$ étant une constante de temps, E étant le résultat de ladite soustraction et $z^*$ étant le complexe conjugué dudit symbole z = x + j y.

Alternativement, on pourra réduire le temps de calcul en adressant directement la table de correspondance à partir de la valeur $x^2 + y^2$ au lieu de celle du module de z.

Le procédé trouve une application directe dans la transmission par voie satellite d'un signal composite comportant une première information primaire UL pouvant être reçue et traitée par un grand nombre de récepteurs de télévision et une information secondaire LL pouvant être reçue et traitée par une sous-catégorie de récepteurs.

L'invention réalise également un récepteur de système de communication numérique destiné à recevoir et traiter un signal composite comportant un premier signal UL et d'un second signal LL. Le récepteur est caractérisé en ce qu'il comporte :

- une première chaîne de démodulation et de décodage pour effectuer la démodulation et décodage dudit premier signal UL de manière à régénérer ladite première information UL ;
- des moyens de recodage et de mise en forme permettant de régénérer une forme d'onde à temps continu desdits symboles reconstitués ;
- une fonction de non linéarité appliquée à ladite fonction à temps continue;
- des moyens pour soustraire le résultat de ladite fonction de non linéarité audit signal composite afin de générer un résultat E ;
- une seconde chaîne de démodulation et de décodage pour effectuer la démodulation et décodage dudit résultat E de manière à régénérer ladite seconde information LL.

De préférence, comme pour le procédé, le récepteur comporte un jeu de coefficients qui sont mis à jour suivant un calcul de corrélation entre le résultat E de ladite soustraction et ladite forme d'onde à temps continu, suivant le mécanisme défini ci-après :

$$C_{n+1}(k) = C_n(k) + \mu \, E \, z^*$$

Avec

$\mu$ étant une constante de temps, E étant le résultat de ladite soustraction et $z^*$ étant le complexe conjugué dudit symbole z = x + j y.

Le récepteur est utilisable pour tout système de communication destiné à un canal non linéaire, et notamment à un récepteur de télévision transmis par voie satellite par des amplificateurs à ondes progressives non linéaires.

**Description des dessins**

D'autres caractéristiques, but et avantages de l'invention apparaîtront à la lecture de la description et des dessins ci-après, donnés uniquement à titre d'exemples non limitatifs. Sur les dessins annexés :

La figure 1 représente la courbe typique d'une non linéarité d'un amplificateur à ondes progressives typiquement utilisé dans l'électronique embarquée d'un satellite.

La figure 2 illustre le principe d'une modulation à déplacement de phase à 8 états permettant la transmission simultanée de trois bits d'information.

La figure 3 illustre un circuit de réception de deux signaux transmis simultanément sur un unique canal de transmission non linéaire, utilisant un circuit de compensation adaptatif.

La figure 4 illustre un mode de réalisation préféré du bloc 5 de modélisation de la fonction de non linéarité du canal de transmission.

La figure 5 illustre le fonctionnement du contrôle adaptatif des coefficients $C_n(k)$ utilisés pour la fonction de non linéarité 5.

La figure 6 illustre le procédé de mise à jour adaptative du jeu de coefficients de la table de correspondance utilisé pour la fonction de non linéarité.

La figure 7 illustre une amélioration du contrôle adaptatif des coefficients $C_n(k)$ au moyen d'un filtre passe-bas inséré en amont du multiplieur 505 de la figure 5.

**Description d'un mode de réalisation préféré**

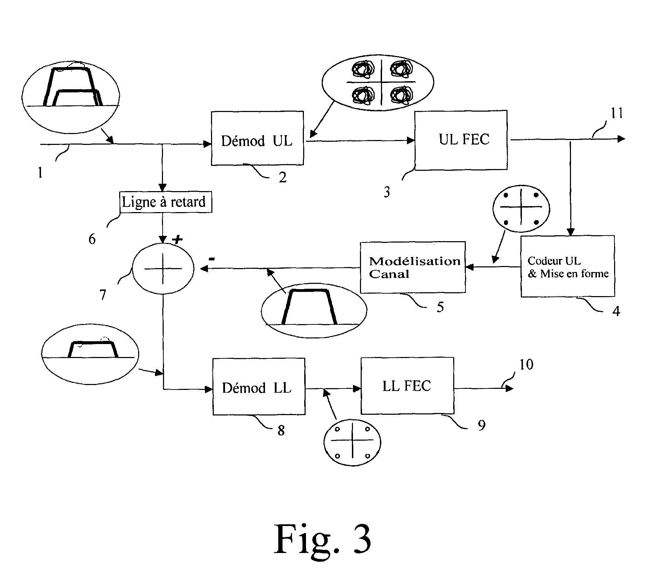

En référence à la figure 3, on décrit à présent un circuit de réception d'un signal composite comportant deux informations transmises simultanément sur un unique canal de transmission de caractéristique non linéaire

On notera que le circuit de réception décrit ci-après est particulièrement adapté à la réception d'un signal composite transmis par satellite. Dans un mode de réalisation donné, le signal composite se compose d'un premier signal dit UL (*Upper Layer*) - préférentiellement d'amplitude prépondérante - et un second signal dit LL (*Lower Layer*) d'amplitude plus réduite. Typiquement, le signal UL est le signal prépondérant d'une première information telle qu'un message télévisé destiné à être reçu et traité par toute une catégorie de systèmes de télévision alors que le second signal LL transporte une seconde information que seule sera capable de décoder une sous-catégorie particulière des systèmes de télévision.

D'une manière générale, les première et seconde information UL et LL sont des informations quelconques qui sont choisis toutefois de manière à ne présenter aucune corrélation.

Comme on le voit dans la figure 3, le circuit de réception - qui pourra être dans une électronique positionnée sur terre - comporte une première chaîne de démodulation permettant de traiter le signal composite reçu (représenté par la référence 1). Cette première chaîne de démodulation se compose d'un démodulateur UL 2 associé à un circuit de correction d'erreur UL FEC 3. Le démodulateur 2 et le circuit de correction d'erreur 3 sont des circuits connus de l'homme du métier et ne seront par conséquent pas exposés plus avant. D'une manière générale, comme cela est connu d'un homme du métier, on associe au démodulateur 2 un code correcteur d'erreur suffisamment puissant - tel que Reed Solomon ou même turbo-code par exemple, afin de pouvoir pallier les insuffisances du canal de transmission et notamment corriger les perturbations émanant de la seconde information LL vue comme du « bruit » pour la chaîne de démodulation 2-3.

La chaîne de démodulation et de correction d'erreur 2-3 permet donc d'éliminer ce « bruit » et, par conséquent, de régénérer l'information première UL qui est disponible sur l'électrode 11 par exemple, et peut être diffusée à tout système ou applicatif destinataire de cette information UL.

Le circuit de réception de la figure 1 comporte en outre un circuit de recodage de l'information primaire UL. Ce dernier se compose d'un codeur UL 4 de mise en forme conçu pour reconstituer la séquence de symboles de la constellation et de transformer cette dernière en une fonction à temps continu présentant un spectre donné, comme cela est réalisé dans le transmetteur. La mise en forme d'un signal physique à partir d'une séquence de symboles est une opération bien connue d'un homme du métier et ne sera pas développée plus avant. Comme cela est connu d'un homme du métier, le bloc de codage et de mise en forme 4 réalise un traitement similaire à celui utilisé par le transmetteur suivant le schéma de modulation considéré, par exemple 8PSK.

Le signal à temps continu généré par le bloc 4 est ensuite transmis à un bloc 5 réalisant une fonction de non linéarité et plus spécifiquement un traitement non linéaire de même nature que celui qui affecte le canal de transmission considéré et, par conséquent, le signal composite 1.

D'une manière générale, de nombreuses manières de modéliser la non linéarité du canal sont envisageables, et notamment lorsque les courbes caractéristiques des transpondeurs à ondes progressives sont connues des constructeurs.

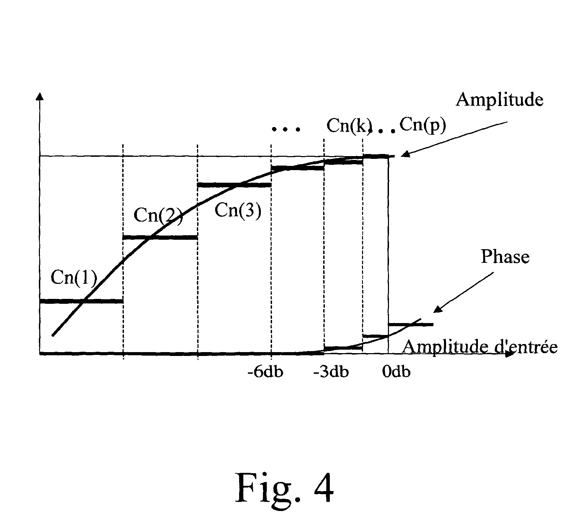

Dans un mode de réalisation préféré, on réalise la fonction de non linéarité du transpondeur au moyen d'une table de correspondance (dite *look-up table*) permettant d'associer à une valeur de l'amplitude d'entrée d'un signal (soit le module d'un complexe $|z| = |x + j\,y|$) un coefficient complexe donné. Il en résulte une modélisation de la non linéarité au moyen d'une courbe d'approximation successive telle que représentée dans la figure 4. Un jeu de p coefficients complexes $C_n(k)$ avec k = 1 à p, correspondent à autant de « paliers » venant approcher la courbe d'amplitude et de phase du transpondeur.

L'indice n tient compte de la variation du coefficient avec le temps au moyen d'un procédé adaptatif qui sera décrit plus loin,

De préférence, on distribue de manière non uniforme les différents « paliers » pour apporter une précision maximale autour du point de saturation de l'amplificateur utilisé dans le satellite comme cela est représenté sur la figure 4.

On développera à présent plus avant la variation du coefficient $C_n$ (k) en fonction de k, puis de n.

1) Variation des coefficients $C_n$ (k) avec l'indice k

Les coefficients $C_n(k)$ sont corrigés de façon telle que la valeur complexe du signal de sortie de la non linéarité est égale à la valeur d'entrée multipliée par le coefficient $C_n$ (k) correspondant au module de l'entrée

Dans la figure 4, si on appelle F(ρ) la réponse en amplitude et θ(ρ) la réponse en phase, le facteur C a idéalement pour module non pas F(p), mais |C| =F(ρ)/|ρ| et pour phase θ(ρ), ρ étant le module de l'entrée; cette solution est choisie car les données entrent et sortent en coordonnées cartésiennes (partie réelle et partie imaginaire), on a simplement à calculer un carré de module pour choisir le coefficient et effectuer une multiplication complexe pour obtenir la sortie : X+jY = C(x+jy)

Alternativement, on peut aussi transformer les coordonnées en polaire, puis calculer directement le nouveau module en tabulant la courbe F(ρ), et ajouter θ(ρ) à l'argument (ou multiplier par exp(jθ(ρ)) ). On peut ensuite repasser en coordonnées cartésiennes mais à coût de mise en oeuvre plus important du fait des nombreux calculs mis en oeuvre.

On notera que l'on peut aussi travailler en développant au premier ordre : au lieu de stocker seulement C on garde aussi un coefficient C' : on aurait de la sorte

X+jY= (C+C'dr) (x+jy) où dr est la différence entre le carré du module mesuré par rapport au carré du module du centre de la classe C(k)

La mise a jour de C est identique, et celle de C' est

$$C'_{n+1}(k) = C'_n (k) + \mu' \, dr \, E \, z^*$$

De cette façon il est possible d'envisager moins d'entrées dans la table, mais au prix toutefois d'une plus grande complexité.

Le circuit de réception comprend en outre un soustracteur 7 qui reçoit en sortie du bloc 5 le signal reconstruit, recodé et traité ainsi que le signal composite affecté d'un délai au moyen d'une ligne à retard 6.

La sortie du soustracteur 7 fournit alors un signal qui, en théorie, est exempt de l'information primaire UL et qui peut donc serveur à une seconde chaîne de démodulation et de décodage pour régénérer l'information secondaire LL. Cette seconde chaîne comporte un démodulateur UL 8 associé à un bloc LL FEC 9 assurant la mise en oeuvre d'un code correcteur d'erreur similaire à l'ensemble 2-3 de la chaîne de démodulation pour l'information primaire UL.

2) Variation des coefficients $C_n$ (k) avec l'indice n

Dans un mode de réalisation préféré, le jeu de coefficients qui est stocké dans la table de correspondance est constamment mis à jour au moyen d'un mécanisme adaptatif qui permet de ne pas connaître les valeurs des caractéristiques internes des transpondeurs non linéaires utilisés dans les satellites.

A cet effet, on insère dans le mécanisme adaptatif une boucle d'asservissement visant à minimiser la corrélation entre deux signaux présents dans le circuit de réception, et en particulier le signal en sortie du soustracteur 7 et le signal en sortie du bloc 5 de modélisation non linéaire.

Plus spécifiquement, on applique le mécanisme de correction qui suit pour calculer la nouvelle valeur $C_{n+1}(k)$ d'un coefficient utilisé par le mécanisme à un instant donné :

$$C_{n+1} (k) = Cn (k) + \mu \, E \, z^*$$

Avec

μ étant une constante de temps permettant une correction de type Proportionnel intégral.

E étant le signal d'erreur en sortie du soustracteur 7 et z* étant le complexe conjugué du signal z = x + j y reconstruit par le bloc 4.

Si le signal d'entrée du bloc 5 est : z = x + j y, en sortie le bloc 5 délivre un valeur Z = X + j Y , avec Z = $C_n(k)$ . z où $C_n(k)$ est le coefficient de la table de coefficients correspondant à la valeur du module d'entrée de z.

D'une manière générale, on constate que la constante de temps propre à ce mécanisme de régulation est proportionnelle à $\mu^* |z|^2$ . On observe une convergence plus rapide du mécanisme si l'on fait décroître μ avec le module de z.

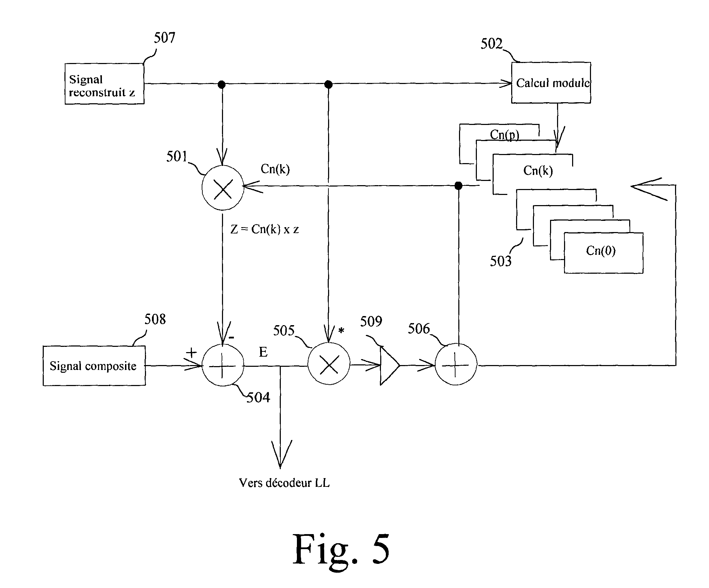

Le fonctionnement du mécanisme adaptatif est illustré plus particulièrement dans le synoptique de la figure 5. Un bloc 507 fournit le signal reconstruit z (après mise en forme par le bloc 4) à un bloc 502 qui effectue le calcul du module de z :

$$|z| = \sqrt{(x^2 + y^2)} \qquad \text{avec } z = x + j \, y$$

La valeur du module est alors utilisé pour sélectionner la valeur de k à utiliser pour le choix du coefficient complexe $C_n$ (k).

Un bloc 501 effectue la multiplication de ce coefficient complexe 501 par le signal z de manière à produire la valeur Z suivant la formule :

$$Z = C_n (k) \times z$$

Cette valeur est ensuite soustraite au signal composite fournie par le bloc 508 au moyen d'un soustracteur 504 lequel fournit alors un signal d'erreur E qui peut être transmis au décodeur LL.

Le même signal E est également transmis à un multiplieur 505 qui reçoit le complexe conjugué du signal z de manière à effectuer une calcul de corrélation :

$$E \times z^*$$

Le résultat est transmis à un bloc atténuateur 509 pour effectuer la multiplication par le coefficient $\mu$ et le résultat est alors ajouté à la valeur courante $C_n(k)$ du coefficient qui a été utilisé dans la boucle d'asservissement. Ainsi, on effectue un contrôle adaptatif de la valeur du coefficient courant $C_n(k)$ de manière à calculer la nouvelle valeur $C_{n+1}(k)$ qui devra être ensuite chargée dans la table.

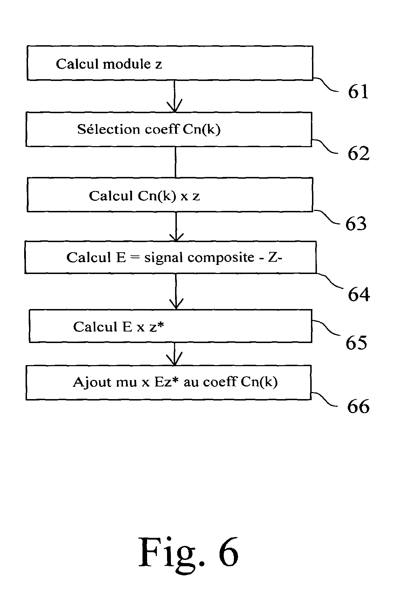

La figure 6 est une représentation du mécanisme d'adaptation suivant une approche formalisée suivant un processus. Au départ, les coefficients Cn(k) sont fixées à une valeur prédéfinie, pouvant éventuellement s'approcher des caractéristiques moyennes internes des transpondeurs utilisés.

Dans une étape 61, on effectue le calcul du module $|z|$

Dans une étape 62, le procédé sélectionne ensuite le coefficient $C_n(k)$ correspondant au module calculé $|z|$

Dans une étape 63, le procédé effectue le calcul $C_n(k) \times z$ qui est réalisé par le bloc 5 ;

Dans une étape 64, le procédé calcule la différence entre le signal composite reçu et le signal en sortie du bloc 5 ;

Dans une étape 65, le procédé effectue le calcul de corrélation entre le signal z et le signal d'erreur E : $E \times z^*$

Dans une étape 66, le coefficient $C_{n+1}(k)$ est mis à jour suivant la formule

$$C_{n+1}(k) = C_n(k) + \mu\, E\, z^*$$

Grâce au mécanisme adaptatif selon la présente invention, on peut opérer de un ajustement automatique des paramètres des coefficients $C_n(k)$ calculés pour minimiser la corrélation entre les deux signaux E et z , ce qui assure l'adaptation du mécanisme même lorsque les caractéristiques internes des transpondeurs évoluent avec le temps.

Dans un mode de réalisation préféré, le mécanisme d'ajustement des valeurs des paramètres réalise simultanément une correction sur deux ou trois paramètres consécutifs $C_n(k)$ et $C_n(k+/- 1)$, avec des pondérations éventuellement differentes au sein de la table de correspondance mise en oeuvre dans le bloc 5.

Dans un autre mode de réalisation, au lieu de calculer le module $|z|$ , on calcule directement la valeur $x^2 + y^2$ et c'est cette valeur qui est directement utilié pour sélectionner le coefficient adéquat $C_n(k)$. On évite ainsi d'extraire la racine carrée ce qui réduit le temps de traitement.

On décrit à présent une amélioration du procédé de contrôle adaptatif des coefficients $C_n(k)$ décrit précédemment en relation avec la figure 5.

On a observé en effet qu'en appliquant les non-linéarités dans le contrôle adaptatif de la figure 5, on accroît la largeur du spectre par la création d'harmoniques , et notamment des harmoniques de rang impair. La convergence du mécanisme de contrôle en est affecté et cela peut s'avérer gênant.

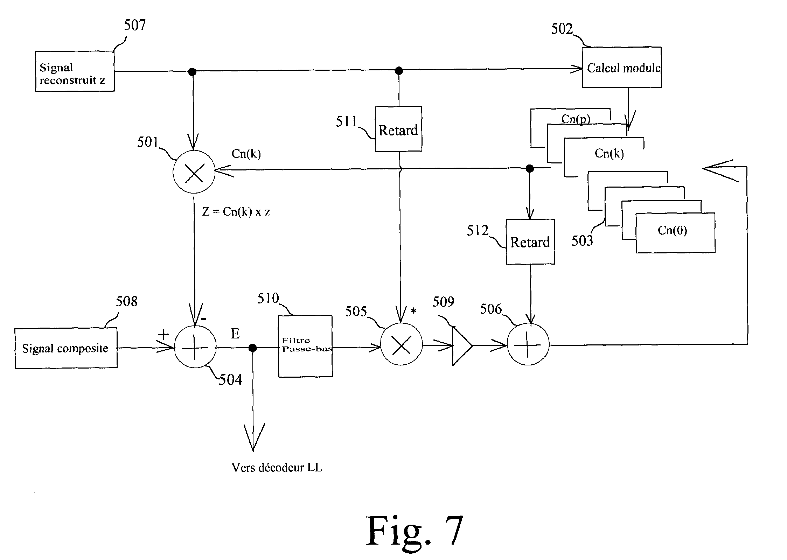

On peut améliorer le procédé de convergence en insérant un filtre passe-bas avant d'appliquer la corrélation comme cela est illustré dans la figure 7 où l'on voit un filtre 510 inséré entre l'additionneur 504 et le multiplieur 505, lequel filtre est choisi de manière à correspondre au filtre de Nyquist du canal de transmission. Il est à noter que les éléments 501 à 509 de la figure 7 sont identiques à ceux de la figure 5 et ne seront par conséquent pas décrits plus avant. Cela a pour effet d'appliquer un filtrage passe-bas sur l'erreur E avant de procéder à sa multiplication par le complexe conjugé $z^*$ (tel que dans l'étape 65 de la figure 6).

Par l'effet du filtre 510, on ne vient corréler que la partie qui se trouve dans la bande de fréquence utilisée et cela permet de faire converger le procédé adaptatif vers des valeurs de coefficients plus précises.

Le filtre passe-bas 510 insérant l'équivalent d'un délai dans le calcul de la corrélation, il importe d'en tenir compte et l'on insérera alors deux éléments de retard.

Un premier élément de retard 511 est inséré entre le bloc 507 fournissant le signal reconstruit z et la seconde entrée du multiplieur 505 recevant $z^*$.

Un second élément de retard 512 est appliqué sur le coefficient Cn(k) avant son insertion dans la seconde branche de l'additionneur 506.

Les retards des éléments 511 et 512 sont choisis de manière à correspondre parfaitement au retard introduit par le filtre 510. Le calcul de tels retards est à la portée d'un homme de métier et ne sera donc pas développé plus avant.

**Revendications**

1. Procédé de réception d'un signal composite transmis via un canal de transmission non linéaire suivant un schéma de modulation utilisant une constellation donnée comportant un premier signal UL et d'un second signal LL, **caractérisé en ce qu'**il comporte les étapes suivantes :

   - démodulation et décodage dudit premier signal UL au moyen d'une première chaîne de démodulation et de décodage (2, 3) de manière à régénérer ladite première information UL ;

- recodage (4) à partir de ladite première information UL régénérée un ensemble de symboles z = x + j y représentatifs de ladite constellation utilisée en transmission et mise en forme pour reconstruire une forme d'onde à temps continu desdits symboles reconstitués ;

- appliquer à ladite forme d'onde à temps continu une fonction de non linéarité autoadaptative (5);

- soustraire audit signal composite le résultat de ladite fonction de non linéarité pour générer un résultat E ;

- démodulation et décodage dudit résultat E au moyen d'une seconde chaîne de démodulation et de décodage (8, 9) de manière à régénérer ladite seconde information LL.

**2.** Procédé selon la revendication 1 **caractérisé en ce que** ladite fonction de non linéarité est réalisée au moyen d'une table de correspondance comportant p coefficients $C_n(k)$ avec k = 1 à p et mis à jour suivant un processus adaptatif basé sur un calcul de corrélation entre le résultat E de ladite soustraction et ladite forme d'onde à temps continu.

**3.** Procédé selon la revendication 1 ou 2 **caractérisé en ce que** l'application desdits coefficients $C_n(k)$ de la fonction non linéaire est réalisée au moyen d'une double transformation cartésienne-polaire-cartésienne comportant les étapes suivantes :

- transformation en coordonnées polaires dudit signal d'entrée pour déterminer le module et la phase dudit signal d'entrée ;

- appliquer la réponse en amplitude $F(\rho)$ et la réponse en phase $\theta(\rho)$ correspondant au coefficient $C_n(k)$ à utiliser;

- conversion polaire/cartésien du résultat.

**4.** Procédé selon la revendication 2 ou 3 **caractérisé en ce que** lesdits p coefficients de la table de correspondance sont distribués de manière plus dense autour du point de saturation du canal de transmission.

**5.** Procédé selon la revendication 2, 3 ou 4 **caractérisé en ce que** le coefficient courant utilisé pour ladite fonction de non linéarité est mis à jour suivant le mécanisme suivant :

$$C_{n+1}(k) = C_n(k) + \mu \, E \, z^*$$

Avec

$\mu$ étant une constante de temps, E étant le résultat de ladite soustraction et z* étant le complexe conjugué dudit symbole z = x + j y.

**6.** Procédé selon la revendication 5 **caractérisé en ce que** l'on applique un filtrage passe-bas sur le résultat de ladite soustraction avant de mutliplier par z* et deux éléments de retard respectivement sur z* et sur $C_n(K)$.

**7.** Procédé selon la revendication 2 **caractérisé en ce que** le coefficient $C_n(k)$ utilisé dans ladite fonction de non linéarité est directement déterminé à partir du calcul de $x^2+y^2$.

**8.** Procédé selon la revendication 4 **caractérisé en ce que** deux coefficients consécutifs dans ladite table de correspondance sont simultanément mis à jour pour chaque calcul de corrélation entre le résultat E de la dite soustraction et la dite forme d'onde à temps continu des complexes z reconstitués.

**9.** Procédé selon l'une des revendications précédentes **caractérisé en ce qu'**il est appliqué à la transmission par voie satellite d'un signal composite comportant une première information primaire UL pouvant être reçue et traitée par un grand nombre de récepteurs de télévision et une information secondaire LL pouvant être reçue et traitée par une sous-catégorie de récepteurs.

**10.** Récepteur pour un système de communication numérique destiné à recevoir et traiter un signal composite transmis via un canal de transmission non linéaire suivant un schéma de modulation utilisant une constellation donnée comportant un premier signal UL et d'un second signal LL, **caractérisé en ce qu'**il comporte :

- une première chaîne de démodulation et de décodage (2, 3) pour effectuer la démodulation et décodage dudit premier signal UL de manière à régénérer ladite première information UL ;

- un bloc de recodage et mise en forme (4) pour régénérer une forme d'onde à temps continu desdits symboles reconstitués ;

- une fonction de non linéarité autoadaptative (5) appliquée à ladite fonction à temps continue;

- des moyens pour soustraire le résultat de ladite fonction de non linéarité audit signal composite afin de générer un résultat E ;

- une seconde chaîne de démodulation et de décodage (8, 9) pour effectuer la démodulation et décodage dudit résultat E de manière à régénérer ladite seconde information LL.

**11.** Récepteur selon la revendication 10 **caractérisé en ce que** ladite fonction de non linéarité est réalisée au moyen d'une table de correspondance comportant p coefficients $C_n(k)$ avec k = 1 à p et mis à jour suivant un processus adaptatif basé sur un calcul de corrélation entre le résultat E de ladite soustraction et ladite forme d'onde à temps continu.

**12.** Récepteur selon la revendication 10 ou 11 **caractérisé en ce que** le coefficient courant utilisé pour ladite fonction de non linéarité est mis à jour suivant le mécanisme suivant :

$$C_{n+1}(k) = C_n(k) + \mu\, E\, z^*$$

Avec

$\mu$ étant une constante de temps, E étant le résultat de ladite soustraction et $z^*$ étant le complexe conjugué dudit symbole $z = x + j\,y$.

**13.** Récepteur selon la revendication **caractérisé en ce que** l'on applique un filtrage passe-bas sur le résultat de ladite soustraction avant de mutliplier par $z^*$ et deux éléments de retard respectivement sur $z^*$ et sur $C_n(K)$.

Amplitude

Amplitude d'entrée

Phase

-6db    -3db    0db

# Fig. 1

# Fig. 2

Fig. 3

Fig. 4

EP 1 478 146 A1

507

Signal reconstruit z

502

Calcul module

Cn(p)

Cn(k)

501

Cn(k)

$Z = Cn(k) \times z$

503

Cn(0)

508

Signal composite

+ − E

505 *

509

506

504

Vers décodeur LL

# Fig. 5

Calcul module z

61

Sélection coeff Cn(k)

62

Calcul Cn(k) x z

63

Calcul E = signal composite - Z-

64

Calcul E x z*

65

Ajout mu x Ez* au coeff Cn(k)

66

Fig. 6

507

502

Signal
reconstruit z

Calcul module

Cn(p)

511    Retard

Cn(k)

501                Cn(k)

Cn(k)

Z = Cn(k) x z

512    Retard        503        Cn(0)

508                510        505    * 509    506

Signal composite        +    E

Filtre
Passe-bas

504

Vers décodeur LL

# Fig. 7

**Office européen des brevets**

## RAPPORT DE RECHERCHE EUROPEENNE

Numéro de la demande

EP 04 36 8039

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 966 412 A (RAMASWAMY KUMAR) 12 octobre 1999 (1999-10-12) * figure 1 * | 1,10 | H04L27/18 |
| A | WO 01/39456 A (THOMSON LICENSING) 31 mai 2001 (2001-05-31) * figures 1,4 * | 1,10 | |
| A | MORETTI ET AL.: "Performance evaluation of a mobile communication system implementing the dual-signal receiver" IEEE VEHICULAR TECHNOLOGY CONFERENCE, 19 septembre 1999 (1999-09-19), - 22 septembre 1999 (1999-09-22) pages 482-486, XP010352918 New York, US ISBN: 0-7803-5435-4 * figure 1 * | 1,10 | |
| X,P | EP 1 361 686 A (HUGHES ELECTRONICS) 12 novembre 2003 (2003-11-12) * figure 5 * | 1,10 | **DOMAINES TECHNIQUES RECHERCHES (Int.Cl.7)** |
| X,P | EP 1 335 512 A (HUGHES ELECTRONICS) 13 août 2003 (2003-08-13) * figure 5 * | 1,10 | H04L |

Le présent rapport a été établi pour toutes les revendications

| Lieu de la recherche | Date d'achèvement de la recherche | Examinateur |
|---|---|---|
| La Haye | 23 août 2004 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 04 36 8039

La présente annexe indique les membres de la famille de brevets relatifs aux documents brevets cités dans le rapport de recherche européenne visé oi-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-08-2004

| Document brevet cité au rapport de recherche | | Date de publication | Membre(s) de la famille de brevet(s) | | Date de publication |
|---|---|---|---|---|---|
| US 5966412 | A | 12-10-1999 | AU | 7975098 A | 19-01-1999 |
| | | | BR | 9810476 A | 19-09-2000 |
| | | | CN | 1118170 B | 13-08-2003 |
| | | | EP | 0988738 A1 | 29-03-2000 |
| | | | HK | 1029466 A1 | 21-11-2003 |
| | | | JP | 2002507358 T | 05-03-2002 |
| | | | WO | 9900957 A1 | 07-01-1999 |
| WO 0139456 | A | 31-05-2001 | AU | 1925301 A | 04-06-2001 |
| | | | WO | 0139456 A1 | 31-05-2001 |
| EP 1361686 | A | 12-11-2003 | EP | 1361686 A1 | 12-11-2003 |
| | | | JP | 2004040761 A | 05-02-2004 |
| EP 1335512 | A | 13-08-2003 | EP | 1335512 A2 | 13-08-2003 |
| | | | JP | 2004040760 A | 05-02-2004 |

EPO FORM P0460

Pour tout renseignement concernant cette annexe : voir Journal Officiel de l'Office européen des brevets, No.12/82